# EUROPEAN PATENT APPLICATION

(11) **EP 1 772 502 A1**
(43) Date of publication of application: **11.04.2007**
(21) Application number: 05077362.1
(22) Date of filing: 07.10.2005
(51) Int. Cl.: C09F 9/00, C08F 283/01, C08L 67/06, C08K 5/07

(54) **Oxidatively drying composition to be employed in thin layers comprising 1,2 dioxo compounds**

(71) Applicant: DSM IP Assets B.V., 6411 TE Heerlen (NL)
(72) Inventor: Jansen, Johan Franz Gradus Antonius, 6165 AP Geleen (NL); Kleuskens, Engelina Catharina, 6181 AK Elsloo (NL); Kraeger, Ivo Ronald, 3742 PJ Baarn (NL)
(74) Representative: van Tol-Koutstaal, Charlotte A.

(57) **Abstract**

The present invention relates to oxidatively drying compositions containing an unsaturation with allylic hydrogen and an oxo-compound for use in layers of less than 1000 μm, wherein the oxo-compound contains at least one 1,2-dioxo-moiety, and wherein at least one of the oxo-groups in at least one of the 1,2-dioxo-moietes is a ketone group. Preferably, the oxo-compound is selected a compound according to formula I 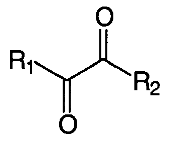 The invention also relates to methods for drying such compositions, by applying the composition to a substrate and exposing it to oxygen.
Finally, the invention also relates to use of such compositions or methods of in a varnish, lacquer, ink, paint, or floor covering.

## Description

The present invention relates to oxidatively drying compositions containing an unsaturation with allylic hydrogen and an oxo-compound as a drying accelerator, which compositions are to be employed in thin layers. Compositions containing an unsaturation with allylic hydrogen are compositions capable of being dried with oxygen, for instance under the influence of air. More particularly the present invention relates to an oxidatively drying composition comprising a polyunsaturated condensation product having pendant groups and an oxo-compound as a drying accelerator. Such compositions are being used in coatings and varnishes. In general, the present invention is also applicable in paints. Generally, the thickness of such layers is less than 1000 µm. Finally, the present invention also relates to methods for oxidatively drying such compositions.

Oxidatively drying compositions such as paints, varnishes and wood stains, are mostly based on resins containing unsaturations, dissolved in an organic medium or in case of water borne paints in an aqueous medium. A special class of resins containing unsaturations is alkyd resins (as will be discussed in more detail in later paragraphs). In alkyd resins, which are the most widely used air drying binders in paint formulations, the oxidatively drying unsaturations are generally based on unsaturated fatty acids or oils. The unsaturations are generally attached to a polymer backbone. Oxidatively drying or air-drying compositions to be employed in thin layers dry by evaporation of the solvent followed by autooxidation of the unsaturations and the subsequent crosslinking of the groups containing these unsaturations.

It is well known that transition metals can accelerate the drying of these resins. Many driers and/or siccatives based on transition metals are known. The most widely used drier is based on cobalt salts and much research is directed towards improving the drying efficiency of these salts. For instance, such improvements are achieved by modification of salts with a coordinating ligand as described in WO03/029371.

One of the classes of accelerators known for use in combination with cobalt salts is the class of 1,3-dioxo-compounds. For instance, see WO03/087192. The drying in such systems, however, is very slow if no transition metal is present.

Using of cobalt, moreover, has quite some disadvantages. For instance, upon standing the catalytic activity diminishes especially in water borne systems. Another major disadvantage is its suspect toxicity (potential carcinogenity).

Hence there is an increasing demand for alternative, non-cobalt based driers. Alternative driers are based on vanadium (like in US6063841), manganese (like in EP1382648) and iron (like in WO03/093384). However these alternative driers are not as active as cobalt driers and are generally coloured.

The aim of the present invention is to provide a solution for the above-mentioned problems.

In their search for alternative and/or improved drying accelerators the inventors have surprisingly found that effective drying of compositions containing an unsaturated component of which at least one of the unsaturations has an allylic hydrogen can be achieved by using specific oxo-compounds as drying accelerator. Oxo-compounds as meant herein are compounds containing at least one carbonyl function.

Accordingly, the present inventors now have found novel oxidatively drying compositions containing an unsaturated component of which at least one of the unsaturations has an allylic hydrogen and containing an oxo-compound as drying accelerator, which compositions are to be employed in thin layers of at most 1000 µm, wherein the oxo-compound contains at least one 1,2-dioxo-moiety, and wherein at least one of the oxo-groups in at least one of the 1,2-dioxo-moieties is a ketone group.

Dioxo-moieties as meant herein are parts of molecules containing two carbonyl functions. In a 1,2-dioxo-moiety, as meant herein, both carbonyl functions are next to each other (i.e. they are vicinal). The numbering 1,2 is to be considered independent of the IUPAC-numbering of the carbon atoms in the molecule, but merely reflects the vicinal character of two oxo-groups.

Clearly, the oxidatively drying compositions according to the invention also may contain other components.

In particular, the oxo-compound containing at least one 1,2-dioxo-moiety in the oxidatively drying compositions according to the invention is selected from the group of vicinal 1,2-dioxo-compounds according to formula I 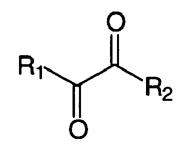 with R₁ and R₂ being identical or different from each other, and representing respectively:
- R₁ :: a group selected from the groups consisting of hydrogen (H), a C₁-C₂₀ alkyl group, and a C₇-C₂₀ alkylaryl group;
- R₂:: a group selected from the groups consisting of H, a C₁-C₂₀ alkyl group, a C₆-C₂₀ aryl group, a C₇-C₂₀ alkylaryl group, a C₇-C₂₀ arylalkyl group, and an alkoxy group OR₃ with
- R₃ :: a group selected from the groups consisting of H, a C₁-C₂₀ alkyl group, a C₆-C₂₀ aryl group, a C₇-C₂₀ alkylaryl group, a C₇-C₂₀ arylalkyl group,
and wherein R₁ and R₂, or R₁ and R₃, may be joint together to form a vicinal dioxo cyclic structure of at least 5 carbon atoms
and/or with any of R₁, R₂ or R₃ representing a polymeric residue.

As meant herein, the terms alkyl, aryl and alkoxy include substituted and/or branched and/or one or more heteroatoms containing alkyl, aryl and alkoxy groups. Examples of substituents are, for instance, groups such as halogens, amines groups, alcohols, ethers, polyalkyleneoxy residues, carboxylates, anhydrides, amides, ureas, urethanes, etc. Examples of polymeric residues are, for instance, polyethylene, polypropylene, polystyrene, polyethylene oxides, polypropylene oxides, polycarbonates, polyurethanes, polyesters, etc. In the case of polymeric residue containing molecules of formula I, the molecules may contain more than one 1,2-dioxo-groups.

Suitable vicinal dioxo-compounds are, for instance, phenylpropanedione, butanedione, 2,3-pentanedione, 2,3-hexanedione, 3,4-hexanedione, 1,4-dibromobutanedione, 1-hydroxy-butanedione, 2,3-dioxobutane carboxylic acid, 2'-hydroxyethyl-2-oxo-3-methyl butyrate, and *p*-methoxy-1-phenyl-1,2-propanedione.

Substituents and choice of R-groups (R₁, R₂ and/or R₃) may also be important for influencing the compatibility of the dioxo-compounds with the other components of the systems wherein the drying accelerator oxo-compounds according to the invention are used.

Preferably, the oxo-compound containing at least one 1,2-dioxo-moiety in the oxidatively drying composition according to the invention is a vicinal diketone.

Suitable vicinal dioxo-compounds according to this preferred embodiment are, for instance, phenylpropanedione, butanedione, 2,3-pentanedione, 2,3-hexanedione and 3,4-hexanedione.

It is preferred that the amount of oxo-compound containing at least one 1,2-dioxo-moiety as is used in accordance with the present invention is between 0.0001 and 10 wt.% relative to the total weight of the composition.

In determining the percentual amount of oxo-compound, the "total weight of the composition" refers to the weight of the composition used as a whole, that is, including the unsaturated component of which at least one of the unsaturations has an allylic hydrogen, the oxo-compound used as drying accelerator, and any other components as will be present in the composition. In such calculation of the total weight of the composition, of course, also the weight of fillers, pigments, etc. has to be taken into account.

Further, it is also preferred that the unsaturated component of which at least one of the unsaturations has an allylic hydrogen is a resinous component having a molecular weight Mn in the range of from 200 to 50,000 Dalton, preferably of at least 500 Dalton. More preferably, the amount of such resinous component is in the range of between 500 and 25,000, even more preferably up to at most 15,000, and most preferably up to at most 7,000 Dalton.

It is to be noted, that the oxo-compound containing at least one 1,2-dioxo-moiety as is used in accordance with the present invention, may also be present as covalently built-in part of the unsaturated component of which at least one of the unsaturations has an allylic hydrogen (i.e. in particular in the resinous compound having a Mn in the range mentioned above) itself. Of course, in such case, the calculation of the amount of oxo-compound at between 0.0001 and 10 wt.% relative to the total weight of the composition, is based on calculation of the weight percentage of such covalently built-in part alone. However, please note, that as such the covalently built-in part also forms part of the Mn of, for instance, the said resinous compound.

If the unsaturated component of which at least one of the unsaturations has an allylic hydrogen is a resinous component, it is preferably a polyunsaturated condensation product having pendant groups in an amount of more than 20 wt.% of the condensation product, and with one or more of the pendant groups comprising at least one ethylenically unsaturated bond having an allylic hydrogen.

The term "pendant groups", as used herein, means that the condensation product contains side-chains attached to the main polycondensation chain.

Most preferably, the polyunsaturated condensation product is an alkyd resin.

Any alkyd resin may be used as an alkyd resin in the compositions according to the invention. Alkyd resins typically are prepared by reacting a diol, a polyol, a polyacid, a monofunctional acid, and a fatty acid, fatty ester or naturally occurring, partially saponified oil, optionally in the presence of a catalyst. Preferably, an alkyd resin is the reaction product of (i) from 0 to about 30 mol% of a diol, (ii) from about 10 to about 40 mol% of a polyol, (iii) from about 20 to about 40 mol% of a polyacid, (iv) from 0 to about 10 mol% of o monofunctional acid, (v) from about 10 to about 50 mol% of a fatty acid, fatty ester or naturally occurring oil and, optionally, (vi) a catalyst, wherein the mole percents a based on the total moles of (i), (ii), (iii), (iv), (v) and (vi) if present. Suitable examples of each of the components of the alkyd resin include those known in the art including, but not limited to, those mentioned below in general terms, and those mentioned in "Resins for Surface Coatings", Vol. 1, p.127 f.f., edited by P. Oldring and G. Hayward, SITA Technology, London, UK, 1987. Reference also can be made to Ullmann's Encyclopedia Vol.A1, 1985, p.409-423 ("Alkyd Resins"). General types of alkyd resins are, for instance, alkyds, urethane alkyds, polyester amide alkyds and hybrid resins thereof, and any emulsions or dispersions thereof.

Also modified alkyds may be used as an alkyd resin in the compositions according to the invention. Examples of modified alkyds are, for instance, chain-stopped alkyds, styrenated alkyds (i.e. alkyds having a polystyrene backbone), acrylated alkyds (i.e. alkyds having a poly(meth)acrylate backbone), alkyds having other olefinic monomers for the polymeric backbone, silicone alkyds, uralkyds, epoxy ester alkyds, phenolic modified alkyds, rosin and rosin ester alkyds, etc.

As already has been mentioned above, the oxidatively drying compositions according to the invention also may contain fillers, and other components. For instance, anti-skinning agents, accelerators, inhibitors, pigments, colorants (dyes), antioxidants, rheology modifiers, stabilizers, thixotropic agents, etc. may be present.

The inventors have found that the effectiveness of drying of the oxidatively drying compositions according to the invention can be adjusted by proper choice of the acid value of the resinous component having a molecular weight Mn in the range of from 200 to 50,000 Dalton, preferably of the alkyd resin. Therefore, according to one preferred embodiment of the invention, the resinous component in the oxidatively drying composition has an acid value of <30, preferably <10 mg KOH/kg resin.

As used herein, the calculation of acid value in "mg KOH/kg resin" is based on the total weight of the resin (i.e. of the resinous component), however excluding any compounds not being soluble therein, such as fillers (e.g. talc, or clay), solid pigments (such as, for instance, titanium dioxide (titanium white)), etc. as may be used when applying the oxidatively drying composition for its intended uses.

Preferably, the resinous component in the oxidatively drying composition has an acid value <5 mg KOH/kg resin, and even more preferably, it is an alkyd resin having an acid value <5, most preferably <2 mg KOH/kg resin.

The amount of the oxo-compound containing at least one 1,2-dioxo-moiety as is used in the compositions according to the invention can be chosen within wide ranges. Preferably, however, the amount of the oxo-compound containing at least one 1,2-dioxo-moiety is between 0.001 and 10 wt.% relative to the weight of the resinous component. Accordingly, calculating this weight percentage is done on the same basis as the aforementioned calculation of acid value, but now in weight percent instead of in mg KOH/kg resin.

The inventors have further found that the drying efficiency of the oxo-compound containing at least one 1,2-dioxo-moiety in the compositions according to the invention can be further enhanced by means of the addition of bases (i.e. of alkaline compounds).

Accordingly, in another preferred embodiment of the invention the oxidatively drying composition further comprises at least one base.

In principle all basic (i.e. alkaline) components can be used and they can be used within a wide range of amounts as compared to the weight of the resinous component. It is preferred, however, that the at least one base is either an organic or inorganic oxide, hydroxide, alkoxide or carboxylate of which the cation has a redox potential of the metal of at most -1 V, or is an ammonium ion; and/or an amine. If the base is an organic or inorganic oxide, hydroxide, alkoxide or carboxylate, then the cation preferably has a redox potential of at most -1,5 V. Suitable examples of these cations and of bases as can be suitably used in the resin compositions according to the invention will be described hereinbelow in more detail. Of course, also mixtures of such bases may be applied according to the invention. Preferably, at least one of the said bases is based on an alkaline or earth alkaline metal, or is an ammonium salt.

As meant herein, the term "redox potential of the metal" refers to the values, in V (Volt), for the transition Mⁿ⁺ to M (*vice versa*), for any specific metal M. These values can be found in CRC Handbook of Chemistry and Physics, 84th Edition (2003-2004) in Section 8, Electrochemical Series, table 1, pages 8-23 to 8-27, CRC Press LLC, Boca Raton / London / New York / Washington, D.C. For convenience, some redox potentials for metals are given below for a number of elements, the redox potentials (in V) shown between brackets: Li (-3,0), Na (-2,7), K (-2,9), Cs (-2,9), Be (-1,7), Mg (-2,4), Ca (-3,0), Sr (-2,9), Ba (-2,9), Sc (-2,1), Y (-2,4), Al (-1,7). All these metals are examples of suitable metals with cations having a redox potential of the metal of at most -1 V.

Suitable carboxylates are, for instance, acetates, benzoates, butyrates, propionates, adipates, mono-/di-/tri-chloroacetates, mono-/di-/trifluoroacetates, naphthenates, neodecanoates, valerates, oleates, stearates, tartrates, ascorbates, succinates, maleates, fumarates, phthalates, citrates, acrylates, methacrylates, itaconates, gluconates, glutarates, etc.

Suitable alkoxides are, for instance, methoxides, ethoxides, propoxides, butoxides, t-butoxides, phenolates, etc.

Examples of suitable oxides and hydroxides are well known to the skilled man, such as, for instance, potassium hydroxide, magnesium oxide, calcium oxide, ammonium hydroxide, tetramethyl ammonium hydroxide, etc.

Examples of suitable amines are, for instance, ammonia, ethanolamine, triethylamine, dimethylethanolamine, 1,8-diazabicyclo-[5,4,0]-undec-7-ene (DBU); 1,4-diazabicyclo-[2,2,2]-octane (DABCO), N-methylethanolamine, ethylenediamine, etc.; of these amines tertiary amines are most preferred. Large lists of tertiary amines are well-known to the skilled artisan.

Preferably, in the oxidatively drying compositions according to the invention at least one of the said bases is based on a Li, Na or K salt, or is a tertiary amine. It is to be noted, that the amine group, preferably the tertiary amine group, also may be part of (i.e may be covalently built-in within) the resinous component, especially the alkyd resin.

Although, as mentioned before, the base can be selected from a wide range of substances, it is preferred that the base dissolves in the resinous component. So preferably the base is an organosoluble base.

In the preferred embodiment of the invention, where the oxidatively drying composition contains at least one base, the amount of base is preferably between 0.0001 and 10 wt.% relative to the weight of the resinous component. In determining the wt.% relative to the "weight of the resinous component", please note that said term does not refer to the total weight of the composition used as a whole, but specifically only to the weight of the unsaturated component of which at least one of the unsaturations has an allylic hydrogen, and all other components present and soluble therein except for any solvent used. Accordingly, in such calculation of the weight of solvent and of any component non-soluble in the resin (e.g. non-soluble fillers, pigments, etc.) is not to be taken into account.

The inventors have, moreover, found that the drying efficiency of the oxo-compound containing at least one 1,2-dioxo-moiety in the compositions according to the invention can be further accelerated by means of the addition of at least one transition metal salt or complex. Therefore, in another preferred embodiment of the invention the oxidatively drying composition according to the invention further comprises a transition metal salt or complex having a redox potential of the metal between -1 and +2 V.

The term "redox potential of the metal" refers to the values, in V (Volt), for the transition Mⁿ⁺ to M (*vice versa*), for any specific metal M. Examples of redox potentials for such metals have been cited above, and/or can be found in the above cited CRC Handbook of Chemistry and Physics reference.

In this embodiment of the invention, the transition metal (as present in the transition metal salts or complexes) is preferably selected from the groups of transition metals with the atomic numbers 21-30 or 39-48. More preferably, the transition metal in the salt or complex is selected from elements with the atomic number 21-30, and most preferably it is selected from the group consisting of V, Mn, and Fe.

The amount of transition metal salt or complex in the oxidatively drying composition according to the invention can vary widely and depends for instance on the intrinsic activity of, and on the colour, of the transition metal salt or complex employed. The man skilled in the art can easily determine the proper amount and type of transition metal salt or complex for any specific application. It is preferred, however, that the amount of transition metal or complex in the oxidatively drying composition is between 0.0001 and 1 wt.% relative to the weight of the resinous component.

Depending of the viscosity of the resinous component in the oxidatively drying composition according to the invention, said composition can further comprise a solvent. In such further, solvent comprising, embodiment of the invention, the amount of solvent can vary within wide ranges depending on whether an organic solvent is used or whether water is employed as solvent/ liquid for emulsifying the resin, for instance in water based coatings. However it is preferred that, if a solvent is present in a composition according to the invention, then it is present in an amount of between 5 and 500 wt.% based on the weight of resinous component. Compositions wherein less than 50 wt.% of solvent are comprised are also referred to as high solids compositions.

Most preferably, however, the oxidatively drying compositions according to the invention are dispersed or emulsified in water. In dispersed systems two-phase liquid systems are present where one phase consists of finely divided particles of insoluble, solid particles distributed throughout the second phase, which is, for instance, water. The solids in the suspension will settle to the bottom of the container when left alone. Emulsions are stable mixtures of two or more immiscible liquids held in suspension by substances called emulsifiers. Dispersions and emulsions are often used in, for instance, latex products and coatings based on alkyd resin compositions. Examples of such dispersions and emulsions can, for instance, be found in WO-02/32982 and WO-02/33012.

In a particularly preferred embodiment of the present invention, the oxidatively drying composition is essentially free of cobalt. As meant herein, the term "essentially free of cobalt" indicates that the composition contains at most 0.0001 wt.% of cobalt relative to the total weight of the composition.

The oxidatively drying compositions according to the invention further may comprises one or more components selected from the group of pigments, dyes, fillers, accelerators, inhibitors, stabilizers, anti-skinning agents, rheology modifiers (e.g. anti-sagging agents), thixotropic agents, and antioxidants. Such further components may add to providing the composition all other desired properties in addition to their drying properties as me be needed during their use and applications.

Finally, the present invention also relates to methods for oxidatively drying such compositions. In particular, the present invention relates to a method of oxidatively drying a compositions containing an unsaturated component of which at least one of the unsaturations has an allylic hydrogen and containing an oxo-compound containing at least one 1,2-dioxo-moiety as drying accelerator, as disclosed herein, wherein the composition is applied to a substrate in a layer of at most 1000 microns and exposed to an oxygen containing environment, preferably to air. Shortly before the composition is applied to the substrate, also a peroxide, and optionally other components, may be added to the composition.

In another preferred embodiment of the method for oxidatively drying a composition containing an unsaturated component of which at least one of the unsaturations has an allylic hydrogen, this method is performed with a composition that also comprises a peroxide component, or to which composition in a separate step a peroxide component is added, and in which method then subsequently, in a first step which is immediately followed by a second step, an oxo-compound containing at least one 1,2-dioxo-moiety according to formula 1 is added to the said peroxide containing composition as a drying accelerator, and wherein the composition so obtained is then applied in said second step to a substrate in a layer of at most 1000 microns, and is then exposed in said layer to oxygen. Details about suitable compounds according to formula 1 can be found in the foregoing description. This preferred method for oxidatively drying may also be referred to as "induced cure" drying method.

Even more preferably, in this other preferred method together with adding of the peroxide or the dioxo-compound also at least a base and/or a transition metal salt or complex is added. Details about suitable bases and transition metal salts or complexes also can be found in the foregoing description. Such bases, respectively transition metal salts or complexes may, of course also be present in the dioxo-component added. In such methods for oxidatively drying the peroxide, of course, also may be added together with the oxo-component shortly before the composition is applied to the substrate and is then exposed to oxygen.

The oxidatively drying compositions, respectively the methods of oxidatively drying according to the invention can be used in many applications such as in varnishes, lacquers, inks, paints, or floor coverings. Accordingly, the present invention also relates to use of an oxidatively drying composition or of a method of oxidatively drying according to the invention in a varnish, lacquer, ink, paint, or floor covering.

The invention is now further illustrated, without being limited thereto, by the following examples and comparative examples.

### Example 1 and Comparative Examples A-B

1 g Methyl linoleate (ML) was mixed with, respectively (as shown in the table) 0.01 g of Co (by adding Co ethylhexanoate in white spirits, containing 6 wt.% Co, corresponding to 10 mmol/kg of ML), butanedione (BD) (1 wt.%), butanedione (1 wt. %) with 2.6 mg of potassium octanoate (K) (as a 15 wt.% K octanoate solution in PEG, corresponding to 10 mmol/kg of ML), phenylpropanedione (PPD) (1%), phenylpropanedione (1 wt.%) with 2.6 mg of potassium octanoate (as before), phenylpropanedione (1 wt.%) with 1.5 mg of 1,8-diazabicyclo-[5,4,0]-undec-7-ene (DBU; corresponding to 10 mmol/kg of ML) as siccative, respectively. A 100 µm film was drawn down on an aluminium Q-panel and exposed to air at room temperature. After pre-determined periods of time a small sample was taken from the Q panel and analyzed with ¹H-NMR. The results (percentage of drying compared to maximum possible drying) are shown in table 1.

**Table 1**

| Ex. / Comp. Ex. | Siccative | 1 day (%) | 2 days (%) | 3 days (%) | 4 days (%) |
|---|---|---|---|---|---|
| A | none | 4 | 10 | 15 | 23 |
| B | Co | 14 | 30 | 57 | 88 |
| 1a | BD | 22 | 42 | 75 | 89 |
| 1b | BD+K | 23 | 47 | 82 | 99 |
| 1c | PPD | 10 | 16 | 37 | 55 |
| 1d | PPD+K | 32 | 55 | 68 | 75 |
| 1e | PPD +DBU | 30 | 50 | 65 | 75 |

These experiments clearly show that butanedione and phenylpropanedione are excellent siccatives for the drying of methyl linoleate (compare 1 a and 1 c with A). These experiment also show that drying of methyl linoleate can be further enhanced by adding a base (compare 1 a vs. 1 b and 1 c vs. 1 d and 1e). Furthermore, these experiments demonstrate that the compositions according to the invention can be equally efficient as siccatives as are cobalt based siccatives.

### Example 2

To Uralac AD43W70 (an alkyd resin from DSM Coating Resins, Zwolle, the Netherlands) was added 1 wt.% butanedione, respectively 1 wt.% phenylpropanedione, as siccative. A 100 µm film was drawn down on an aluminium Q-panel and exposed to air at room temperature. After 4 days the films were tack free and a good through cure was obtained after 5 days. These experiments demonstrate that the compounds according to the invention can be used as siccatives for alkyd resins.

### Example 3

To Uralac AD43W70 (alkyd resin from DSM Coating Resins, Zwolle, the Netherlands) was added 1 wt.% dione and 10 mmol/ kg resin of a transition metal salt, and/or of the base potassium octanoate in PEG (10 mmol/kg of resin), as siccative (as indicated in table 2), respectively. A 100 µm film was drawn down on an aluminium Q-panel and exposed to air at room temperature. The results are shown in table 2.

**Table 2**

| | | | | 1 day | | 2 days | |
|---|---|---|---|---|---|---|---|
| Ex. | Dione | Transition metal | Base | tack free | through cure | tack free | through cure |
| 3a | BD | Fe Naphtenate | | yes | yes | yes | yes |
| 3b | BD | Mn(AcAc)₃ | | yes | yes | yes | yes |
| 3c | BD | V(AcAc)₃ | | yes | almost | yes | yes |
| 3d | BD | V(O)(AcAc)₂ | | no | no | almost | yes |
| 3e | BD | V(O)(AcAc)₂ | K | yes | almost | yes | yes |
| 3f | BD | V(O-iPr)₃ | | yes | yes | yes | yes |
| 3g | BD | V(O-iPr)₃ | K | yes | yes | yes | yes |
| 3h | PPD | Fe Naphtenate | | yes | yes | yes | yes |
| 3i | PPD | Mn(AcAc)₂ | | yes | almost | yes | yes |
| 3j | PPD | Mn(AcAc)₂ | K | yes | yes | yes | yes |
| 3k | PPD | Mn(AcAc)₃ | | yes | almost | yes | yes |
| 3l | PPD | Mn ethylhexanoate | | yes | almost | yes | yes |
| 3m | PPD | Mn ethylhexanoate | K | yes | yes | yes | yes |
| 3n | PPD | V(AcAc)₃ | | yes | almost | yes | yes |
| 3o | PPD | V(AcAc)₃ | K | yes | yes | yes | yes |
| 3p | PPD | V(O)(AcAc)₂ | | yes | almost | yes | yes |
| 3q | PPD | V(O)(AcAc)₂ | K | yes | yes | yes | yes |

These experiments clearly demonstrate that good alkyd drying can be obtained by using a combination of a composition according to the invention with a transition metal. Furthermore adding a base further improves the curing.

### Example 4 and Comp. Example C

To Uralac AD43W70 (an alkyd resin from DSM Coating Resins, Zwolle, the Netherlands; with an acid value of 7) was added a dione in varying amounts and 10 mmol/ kg resin of Mn(AcAc)₃ (6 wt.% solution in butanol) metal salt as siccative, respectively (as indicated in the table). A 100 µm film was drawn down on an aluminium Q-panel and exposed to air at room temperature. The results (tack free or not; and through cure after 16 hours; König hardness after 1 and 14 days) are shown in table 3.

**Table 3**

| Ex. / Comp. Ex. | wt. % dione | Tack free | through cure | König Hardness after 1 day (sec) | König Hardness after 14 days (sec) |
|---|---|---|---|---|---|
| 4a | 0.1 BD | yes | yes | 18 | 23 |
| 4b | 0.25 BD | yes | yes | 15 | 23 |
| 4c | 0.5 BD | yes | yes | 11 | 25 |
| 4d | 1 BD | yes | yes | 11 | 27 |
| 4e | 0.1 PPD | yes | yes | 113 | 22 |
| 4f | 0.25 PPD | yes | yes | 12 | 22 |
| 4g | 0.5 PPD | yes | yes | 17 | 27 |
| 4h | 1 PPD | yes | yes | 15 | 25 |
| Comp. C with10 mmol/kg Co | | yes | almost | 10 | 22 |

Again these experiments demonstrate that drying comparable or even faster than a Cobalt based siccative can be achieved

### Example 5 and Comp. Examples D-E

To 40g Uralac AD46Q-70 (an alkyd resin from DSM Coating Resins) was added 10 g styrene and various additives, as siccatives. A 100 µm film was drawn down on an aluminium Q-panel and exposed to air at room temperature. The results (hours until tack free; König hardness after 1 and 4 days) are shown in table 4.

**Table 4**

| Ex. / Comp. Ex. | additives | Tack free (hr) | König hardness after 1 day (sec) | König hardness after 4 days (sec) |
|---|---|---|---|---|
| D | none | no | tacky | tacky |
| E | Co (8.5 mmol/kg) | 1.15 | 20 | 28 |
| 5a | 1 wt.% PPD | 4.30 | 16 | 20 |
| 5b | 1 wt.% PPD + 0.1 wt.% Li (0.28 mmol/kg) | 3.00 | 16 | 20 |
| 5c | 1 wt.% PPD + 0.1 wt.% Mn (0.11 mmol/kg) | 2.30 | 16 | 20 |

| | | | | |
|---|---|---|---|---|
| Li = lithium neodecanoate in whitespirits 2 wt.% Li Mn = Mn(AcAc)₃ in butanol 6 wt.% Mn | | | | |

Comparing these Examples and Comparative Examples again shows the good drying effects according to the preferred embodiments of the invention.

### Example 6

To Uralac AZ554 (an alkyd emulsion from DSM Coating Resins) was added 1 wt.% phenylpropanedione and 0.1 wt.% Mn(AcAc)₃ solution in butanol (0.11 mmol Mn /kg alkyd emulsion) as siccative. A 100 µm film was drawn down on an aluminium Q-panel and exposed to air at room temperature. After 2 hours the film was tack free; it was through cured overnight. The same results were obtained when cobalt was used (8.5 mmol Co metal/ kg emulsion). Again, these results indicate that the compositions according to the invention can be used in drying of alkyd emulsions.

### Example 7

To 65 g Uralac AD 43 W70 with an AV=0.2 was added 10g white spirit, 1.4 g additive (Ser AD FA 601) and 140 g titanium dioxide (Ti oxide TR92) This mixture was mixed thoroughly at high speed until homogeneous after which 215 resin, 1.5g anti-skinning agent (Exkin 2) and 70 g white spirit was added, followed by a next homogenation step. To 250g of this mixture was added 1 g phenylpropanedione and 1.85 g Mn (ACAc)₃ solution (1.5 wt.% in butanol) and again this was mixed thoroughly. Draw downs (100 µm layer) were prepared on a glass plate and the drying was monitored. After 5 hours the coating was dust free, and a tack free coating was obtained after 7 hours, whereas overnight a sufficient through cure was obtained.

## Claims

1. Oxidatively drying composition containing an unsaturated component of which at least one of the unsaturations has an allylic hydrogen and containing an oxo-compound as drying accelerator, which compositions are to be employed in thin layers of at most 1000 µm,
wherein the oxo-compound contains at least one 1,2-dioxo-moiety, and wherein at least one of the oxo-groups in at least one of the 1,2-dioxo-moieties is a ketone group.

2. Oxidatively drying composition according to claim 1,
wherein the oxo-compound containing at least one 1,2-dioxo-moiety, is selected from the group of vicinal dioxo-compounds according to formula I 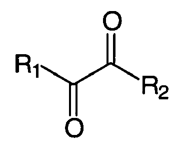 with R₁ and R₂ being identical or different from each other, and representing respectively:
R₁ : a group selected from the groups consisting of hydrogen (H), a C₁-C₂₀ alkyl group, and a C₇-C₂₀ alkylaryl group;
R₂: a group selected from the groups consisting of H, a C₁-C₂₀ alkyl group, a C₆-C₂₀ aryl group, a C₇-C₂₀ alkylaryl group, a C₇-C₂₀ arylalkyl group, and an alkoxy group OR₃ with
R₃: a group selected from the groups consisting of H, a C₁-C₂₀ alkyl group, a C₆-C₂₀ aryl group, a C₇-C₂₀ alkylaryl group, a C₇-C₂₀ arylalkyl group,
and wherein R₁ and R₂, or R₁ and R₃, may be joint together to form a vicinal dioxo cyclic structure of at least 5 carbon atoms
and/or with any of R₁, R₂ or R₃ representing a polymeric residue.

3. Oxidatively drying composition according to any of claims 1 to 2,
wherein the oxo-compound containing at least one 1,2-dioxo-moiety is a vicinal diketone.

4. Oxidatively drying composition according to any of claims 1 to 3,
wherein the amount of oxo-compound containing at least one 1,2-dioxo-moiety is between 0.0001 and 10 wt.% relative to the total weight of the composition.

5. Oxidatively drying composition according to any of claims 1 to 4,
wherein the unsaturated component of which at least one of the unsaturations has an allylic hydrogen is a resinous component having a molecular weight Mn in the range of from 200 to 50,000 Dalton, preferably of at least 500 Dalton.

6. Oxidatively drying composition according to claim 5,
wherein the resinous component is a polyunsaturated condensation product having pendant groups in an amount of more than 20 wt.% of the condensation product, and wherein one or more of the pendant groups comprises at least one ethylenically unsaturated bond having an allylic hydrogen.

7. Oxidatively drying composition according to claim 6,
wherein the polyunsaturated condensation product is an alkyd resin.

8. Oxidatively drying composition according to any of claims 5 to 7,
wherein the resinous component has an acid value of <30, preferably <10 mg KOH/kg resin.

9. Oxidatively drying composition according to claim 8,
wherein the resinous component has an acid value <5 mg KOH/kg resin.

10. Oxidatively drying composition according to claim 9,
wherein the alkyd resin has an acid value <5, preferably <2 mg KOH/kg resin.

11. Oxidatively drying composition according to any of claims 1 to 10, wherein the amount of the oxo-compound containing at least one 1,2-dioxo-moiety is between 0.001 and 10 wt.% relative to the weight of the resinous component.

12. Oxidatively drying composition according to any of claims 1 to 11,
wherein the composition further comprises at least one base.

13. Oxidatively drying composition according to claim 12,
wherein the at least one base is either an organic or inorganic oxide, hydroxide, alkoxide or carboxylate of which the cation has a redox potential of the metal of at most -1 V, or is an ammonium ion; and/or an amine.

14. Oxidatively drying composition according to any of claims 12 or 13,
wherein at least one of said bases is based on a Li, Na or K salt.

15. Oxidatively drying composition according to claim 12 or 13,
wherein at least one of the said bases is a tertiary amine.

16. Oxidatively drying composition according to any of claims 12 to 15,
wherein the amount of base is between 0.0001 and 10 wt.% relative to the weight of the resinous component.

17. Oxidatively drying composition according to any of claims 1 to 16,
wherein the composition further comprises a transition metal salt or complex having a redox potential of the metal between -1 and +2 V.

18. Oxidatively drying composition according to claim 17,
wherein the transition metal or complex is selected from elements with the atomic number 21-30, most preferably selected from the group consisting of V, Mn, Fe.

19. Oxidatively drying composition according to any of the claims 17 or 18,
wherein the amount of transition metal or complex is between 0.0001 and 1 wt.% relative to the amount of resinous component.

20. Oxidatively drying composition according to any of the claims 1-19,
wherein the composition further comprises a solvent in an amount of solvent of between 5 and 500 wt.% based on the weight of resinous component.

21. Oxidatively drying composition according to claim 20,
wherein the composition is dispersed or emulsified in water.

22. Oxidatively drying composition according to any of the claims 1-21,
wherein the composition is essentially free of cobalt and contains at most 0.0001 wt.% of cobalt relative to the total weight of the composition.

23. Oxidatively drying composition according any of claims 1-22,
wherein the composition further comprises one or more components selected from the group of pigments, dyes, fillers, accelerators, inhibitors, stabilizers, anti-skinning agents, rheology modifiers, thixotropic agents, and antioxidants.

24. Method of oxidatively drying a composition containing an unsaturated component of which at least one of the unsaturations has an allylic hydrogen and containing an oxo-compound as drying accelerator, according to any of the claims 1-23,
wherein the composition is applied to a substrate in a layer of at most 1000 microns and exposed to an oxygen containing environment, preferably to air.

25. Method of oxidatively drying a composition containing an unsaturated component of which at least one of the unsaturations has an allylic hydrogen,
wherein the composition also comprises a peroxide component, or wherein in a separate step a peroxide component is added to the composition,
and wherein subsequently, in a first step which is immediately followed by a second step, an oxo-compound containing at least one 1,2-dioxo-moiety according to formula 1 is added to the said peroxide containing composition as a drying accelerator, and the composition so obtained is applied in said second step to a substrate in a layer of at most 1000 microns, and is then exposed in said layer to oxygen.

26. Method according to claim 25, wherein together with adding of the peroxide or the dioxo-compound also at least a base and/or a transition metal salt or complex is added.

27. Use of an oxidatively drying composition or of a method of oxidatively drying according to any of the claims 1-26 in a varnish, lacquer, ink, paint, or floor covering.
